(19)

(11) **EP 4 030 888 B1**

(12) # EUROPÄISCHE PATENTSCHRIFT

(45) Veröffentlichungstag und Bekanntmachung des Hinweises auf die Patenterteilung:
**16.04.2025 Patentblatt 2025/16**

(21) Anmeldenummer: **20780591.2**

(22) Anmeldetag: **17.09.2020**

(51) Internationale Patentklassifikation (IPC):
***A01D 41/14*** *(2006.01)*

(52) Gemeinsame Patentklassifikation (CPC):
**A01D 41/141**

(86) Internationale Anmeldenummer:
**PCT/EP2020/076026**

(87) Internationale Veröffentlichungsnummer:
**WO 2021/053099 (25.03.2021 Gazette 2021/12)**

(54) **SCHNEIDWERK MIT SENSOREN ZUR HÖHENREGELUNG**

CUTTING UNIT HAVING SENSORS FOR HEIGHT CONTROL

UNITÉ DE COUPE COMPORTANT DES CAPTEURS POUR LA RÉGULATION DE LA HAUTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2019 DE 102019125280**

(43) Veröffentlichungstag der Anmeldung:
**27.07.2022 Patentblatt 2022/30**

(73) Patentinhaber: **Carl Geringhoff GmbH & Co. KG
59227 Ahlen (DE)**

(72) Erfinder:
- **SCHARMANN, Jochen
48231 Warendorf (DE)**
- **STÜCKMANN, Raphael
48317 Drensteinfurt (DE)**
- **WEBERMANN, Dirk
48308 Senden (DE)**
- **SUDHUES, Steffen
59227 Ahlen (DE)**

(74) Vertreter: **Weeg, Thomas
Busse & Busse
Patent- und Rechtsanwälte Partnerschaft
Großhandelsring 6
49084 Osnabrück (DE)**

(56) Entgegenhaltungen:
**EP-A1- 2 695 511**
**WO-A1-2018/152266**
**DE-A1- 2 951 579**
**DE-A1- 4 406 892**
**US-A1- 2014 245 712**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 030 888 B1

## Beschreibung

Die vorliegende Erfindung bezieht sich auf ein Schneidwerk zum Anbau an den höhenverstellbaren Einzugskanal einer Erntemaschine mit einem Rahmen, einer mit dem Rahmen verbundenen Anbauvorrichtung zum Anbau des Schneidwerks an die Erntemaschine, Schneidelementen, Fördervorrichtungen und Antrieben, zumindest einem am Schneidwerk angeordneten Abstandssensor zur Ermittlung des Abstands des Schneidwerks vom Boden, und einer Schnittstelle, über die höhensteuerungsrelevante Signale an eine auf der Erntemaschine angeordnete Steuerungs- oder Regelungsvorrichtung übermittelbar sind.

Aus der Schrift DE 44 06 892 A1 ist ein Abstandssensor bekannt, der an der Unterseite des Schneidwerks angeordnet ist und den Bodenabstand des Schneidwerks misst. Das vom Abstandssensor bereitgestellte Signal wird an eine Steuerungsvorrichtung übermittelt, die das Signal auswertet und ein Stellsignal an eine Stellvorrichtung generiert, mit dem die Höhenlage des Schneidwerks um ein der gemessenen Abstandsänderung entsprechendes Maß korrigiert wird. Neben dem Abstandssensor ist in dieser Schrift ein Drucksensor offenbart, mit dem der Hydraulikdruck im Hydrauliksystem für die Hydraulikzylinder gemessen wird, über die der das Schneidwerk tragende Einzugskanal verstellt wird. Die Höhensteuerung des Schneidwerks erfolgt alternativ über die Sensorwerte des Drucksensors oder des Abstandssensors.

Aus der Schrift EP 3 335 541 ist ein Schneidwerk bekannt, in dem zwei Sensoranordnungen vorhanden sind, die jeweils für sich in einem bestimmten Betriebsmodus mit einem starren oder flexibel geschalteten Schneidwerk eingesetzt werden, jedoch nicht in einem kombinierten Betrieb. Während es sich bei einem Sensor um einen Bodentaster handelt, dessen Bewegungen über ein Potentiometer ausgewertet werden, handelt es sich bei dem anderen Sensor um einen Drehwinkelgeber, der die Bewegung eines Tragarms abgreift.

Aus der Schrift EP 3 363 276 A1 ist ein Schneidwerk bekannt, bei dem die Bewegungen zwei beweglicher unterschiedlicher Maschinenelemente zur Bodenabstandsmessung von einem gemeinsamen Potentiometer gemessen und an einen Prozessor übermittelt werden, der die übermittelten Sensordaten zur Höhenregelung des Schneidwerks auswertet. Je nach Betriebsmodus des Prozessors und des Schneidwerks - starr oder flexibel - werden die Bewegungen des einen oder anderen Maschinenelements über das Potentiometer vom Prozessor weiterverarbeitet.

Schließlich ist aus dem Stand der Technik noch die gattungsgemäße Schrift EP 2 695 511 A1 bekannt. Diese Schrift offenbart ein System zur Höhenregelung mit einem Abstandssensor, einem Gewichtssensor, einer Bedieneinheit und einer elektronischen Recheneinheit, die in Abhängigkeit von einer vom Bediener vorgewählten Höhenvorgabe einen Höhenwert nach einem von mehreren Algorithmen bestimmt. Die Sensorsignale werden jeweils direkt an die elektronische Recheneinheit übermittelt. Die Schrift WO 2018/152266 A1 offenbart nur einen Abstandssensor an einem Erntevorsatz. Die Abstandssensordaten werden über ein am Schneidwerk befindliches Interface an die elektronische Steuerung übermittelt.

Wenn in dieser Beschreibung von einem Abstandssensor die Rede ist, so kann dieser den Abstand des untersten Punktes des Schneidwerks zum Boden messen. Der vom Abstandssensor gemessene Abstand kann aber auch auf einen anderen Punkt des Schneidwerks bezogen ermittelt werden, beispielsweise auf den Abstand des Messerbalkens als Schneidelement zum Boden. Nachfolgend ist vereinfachend nur vom Abstand des Schneidwerks zum Boden die Rede, auch wenn dieser Abstandswert auf ein bestimmtes Bauteil des Schneidwerks bezogen ermittelt wird, das nicht den geringsten Abstand eines Schneidwerkbauteils zum Boden aufweist.

Die bekannten Sensoranordnungen für Höhenregelungen dienen dem Zweck, die Höhenführung des Schneidwerks an unterschiedliche Erntebedingungen anpassen zu können. So werden die in der Schrift DE 44 06 892 A1 offenbarten Bodentaster verwendet, um die Höhenführung des Schneidwerks bei Lagergetreide zu steuern, während die Drucksensoren und die Lagesensoren eingesetzt werden, wenn das Schneidwerk mit einem größeren Bodenabstand in stehenden Beständen eines Ernteguts gefahren wird. Gemäß der Schrift EP 3 335 541 wird der Bodentaster dazu genutzt, das Schneidwerk in einem starren Betriebsmodus in einem größeren Abstand zum Boden zu betreiben, während der Drehwinkelgeber an den Tragarmen in einem flexiblen Betriebsmodus genutzt wird, um das Schneidwerk bei Bedarf anzuheben oder abzusenken. Auch in dem Schneidwerk, das in der Schrift EP 3 363 276 offenbart ist, werden die Bewegungen des Bodentasters oder des Tragarms in einem starren oder in einem flexiblen Betriebsmodus zur Höhenregelung des Schneidwerks verwendet.

Die unterschiedlichen Sensoranordnungen, die in den aus dem Stand der Technik bekannten Schneidwerken verwendet sind, dienen also jeweils immer nur dazu, die von ihnen generierten Sensorwerte für einen der jeweiligen Sensoranordnung zugeordneten Betriebsmodus der Höhenführung des Schneidwerks zu dienen. Um dies leisten zu können, ist es erforderlich, die Höhenführung des Schneidwerks jeweils in einen anderen Betriebsmodus umzuschalten. Diese Umschaltung kann manuell durch den Fahrer der Erntemaschine erfolgen, es ist aber auch eine automatisierte Umschaltung möglich, die unabhängig von Bedieneingaben des Fahrers erfolgt.

Ein Nachteil der bekannten Lösungen ist darin zu sehen, dass die Umschaltung der Schneidwerke nur möglich ist, wenn ein Schneidwerk an einer Erntemaschine verwendet wird, das an die Bedienelektronik der Erntemaschine angepasst ist. Das ist üblicherweise nur innerhalb der Elektronikarchitektur eines Erntemaschinenfabrikats möglich. Schneidwerke, die zum Fabrikat der Erntemaschine fremd sind, bleiben somit von einer Umschaltungsmöglichkeit ausgeschlossen.

Ein weiterer Nachteil der bekannten Systeme ist darin zu sehen, dass die laufenden Umschaltungen die Konzentration und Überwachung des Fahrers beanspruchen. Das gilt nicht nur, wenn er die Umschaltungen manuell ausführen muss, sondern auch bei automatisiert erfolgenden Umschaltungen, weil diese nicht immer zeit- und situationsgerecht erfolgen oder über die Arbeitsbreite eines Schneidwerks gesehen in einer Teilarbeitsbreite der eine und in einer anderen Teilarbeitsbreite der andere Betriebsmodus wünschenswert wären. Die Umschaltautomatiken lenken deshalb den Fahrer von anderen Bedienaufgaben ab und können bei einer Unachtsamkeit des Fahrers sogar zu Schäden am Schneidwerk führen, wenn dieses einen zu harten Bodenkontakt hat, oder es führt zu Erntegutverlusten, wenn das Schneidwerk zu hoch geführt wird. Wenn das Schneidwerk bodennah eingestellt wird, was eigentlich den Normalfall darstellt, kann es zu laufenden Umschaltungen zwischen den Betriebsmodi kommen, was den Fahrer verunsichert und ihn dazu verlasst das Schneidwerk höher einzustellen, als es eigentlich erforderlich und möglich wäre.

Es ist die Aufgabe der vorliegenden Erfindung, die sensorgestützte Höhenführung von Schneidwerken zu verbessern.

Die Aufgabe wird für ein gattungsgemäßes Schneidwerk gelöst, indem der Schnittstelle eine Auswertevorrichtung vorgeordnet ist, der die vom Abstandssensor gemessenen Sensorwerte über eine Verbindungsleitung übermittelt werden, das Schneidwerk zumindest einen zusätzlichen Belastungssensor aufweist, der die Belastung misst, mit der das Schneidwerk den Einzugskanal belastet, die vom Belastungssensor gemessenen Sensorwerte ebenfalls an die Auswertevorrichtung über eine Verbindungsleitung übermittelt werden, und die Auswertevorrichtung ein Programm aufweist, das über eine geeignete Programmierung aus den übermittelten Sensorwerten des Abstandssensors und des Belastungssensors ein höhensteuerungsrelevantes Signal errechnet, das an die Schnittstelle übermittelt wird.

Mit dem zusätzlichen Belastungssensor kann die Auswertevorrichtung erkennen, ob das Schneidwerk allein vom Einzugskanal getragen wird oder ob eine teilweise oder vollständige Entlastung durch einen Bodenkontakt des Schneidwerks vorliegt. Die Belastung des Einzugskanals wird aber nicht durch eine Druckmessung im Hydraulikkreislauf der Hydraulikzylinder vorgenommen, die den Einzugskanal tragen, sondern direkt im Schneidwerk. Veränderungen in der Belastung des Einzugskanals sind dadurch schneller erkennbar, weil die Belastungsänderungen nicht erst in einem nachgeordneten Hydrauliksystem gemessen werden, nachdem sie dort in Gestalt von messbaren Druckveränderungen angekommen sind.

Ein weiterer Vorteil ist in der direkten laufenden Verknüpfung der vom Belastungssensor gemessenen Sensorwerte mit den vom Abstandssensor gemessenen Sensorwerten zu sehen. Der Abstandssensor liefert nur dann für eine Höhenregelung brauchbare Sensorwerte, wenn das Schneidwerk noch einen Abstand zum Boden hat. Liegt das Schneidwerk auf dem Boden auf, ist der Wert für den Abstand Null.

Der Abstandssensor liefert aber keinerlei Informationen darüber, ob bei einem Bodenkontakt ein Teil des Gewichts des Schneidwerks noch vom Einzugskanal getragen wird oder nicht. Gerade dann ist es aber für eine Höhenführung von besonderem Interesse, zu wissen, mit welchem Gewicht das Schneidwerk auf dem Boden aufliegt. Im Gegensatz dazu liefert ein Belastungssensor keine für eine Höhenführung des Schneidwerks brauchbaren Sensorwerte, wenn der Einzugskanal das volle Gewicht des Schneidwerks trägt, weil dann immer 100 % des Gewichts des Schneidwerks vom Einzugskanal getragen sind. Gerade dann ist es aber für die Höhenführung des Schneidwerks von besonderem Interesse, zu wissen, ob die Unterseite des Schneidwerks nur 1 cm oder 50 cm vom Boden entfernt ist.

Nach dem Stand der Technik wird bei dem Erreichen oder Enden des Bodenkontakts in einen anderen Betriebsmodus umgeschaltet, in dem andere Sensoren mit anderen Sensorsignalen für die Höhenregelung des Schneidwerks benutzt werden. Wenn aber die Sensorsignale des Abstandssensors und des Belastungssensors in einer gemeinsamen Auswertevorrichtung laufend zu einem höhensteuerungsrelevanten Signal verrechnet werden, können die vom Abstandssensor und dem Belastungssensor generierten Sensorwerte gemeinsam in das fortlaufend generierte höhensteuerungsrelevante Signal einfließen, ohne dass dafür der Betriebsmodus der Erntemaschine und/oder des Schneidwerks geändert werden muss. Gerade die abrupten Übergänge zwischen den Betriebsbereichen, in denen der eine oder der andere Sensortyp noch brauchbare Sensorwerte liefert oder schon nicht mehr, können durch die Verrechnung der Sensorwerte zu einem höhensteuerungsrelevanten Signal fließend erfolgen.

Auf die Hin- und Herschaltung zwischen verschiedenen Betriebsmodi kann verzichtet werden, weil die Sensorwerte der verschiedenen Sensortypen laufend in die Ermittlung des höhensteuerungsrelevanten Signals einfließen. Das aus den verschiedenen Sensortypen errechnete höhensteuerungsrelevante Signal bleibt insbesondere bei einer im Erntebetrieb häufigen bodennahen Schneidwerksführung konstant, wodurch sich die Zahl der Verstellvorgänge bei der Höhenführung des Schneidwerks verringert und der Fahrer dadurch erheblich von daraus folgenden Kontrollaufgaben und manuellen Regelungseingriffen entlastet wird. Das Risiko von fehlerhaften Umstellungen, durch die das Schneidwerk beschädigt werden könnte, wird verringert. Gleichzeitig steigt das Vertrauen des Fahrers der Erntemaschine in die Höhenführung des Schneidwerks, so dass er sich traut, das Schneidwerk tiefer einzustellen als mit der herkömmlichen Technik. Der Ernteertrag kann dadurch steigen, und auch die Feldhygiene verbessert sich, weil Insekten, Pilzen und anderen Schädlingen weniger Rückzugsraum geboten wird, wenn die zu erntende Frucht vollständiger abgeerntet wird.

Der Abstandssensor kann ein mechanischer Taster oder auch ein optischer, akustischer oder sonstiger Sensor wie beispielsweise ein Radar-, Ultraschall-, Lasersensor sein, mit dem ein Abstand des Schneidwerks zum Boden gemessen werden kann. Der Sensorwert des Abstandssensors kann kabelgebunden über eine Verbindungsleitung elektrisch, durch eine direkte Verkabelung oder ein Bus-Netz, per Lichtwellenleiter, über einen NFC-Chip, per Funk/W-LAN oder auf sonstige Weise an die Auswertevorrichtung übertragen werden. Der oder die Abstandssensoren sind so an dem Schneidwerk positioniert, dass sie laufend den Abstand des Schneidwerks, bevorzugt des Schneidelements gegenüber dem Boden messen können. Die vom Abstandssensor gemessenen Abstandswerte können als Sensorwert im Verhältnis zum reinen Messwert um einen Betrag korrigiert sein, beispielsweise um ein Höhenmaß, um das der Abstandssensor höher oder tiefer angeordnet als der Bezugspunkt am Schneidwerk, auf den sich der Sensorwert bezieht.

Der Belastungssensor ist ein Sensor, der die Belastung des Einzugskanals mit dem Gewicht des Schneidwerks erfasst. Der Belastungssensor kann beispielsweise als eine Wiegezelle, ein Dehn-Messstreifen, ein piezoelektrisches Element oder dergleichen ausgebildet sein. Der Belastungssensor kann aber auch relative oder indirekte Sensorwerte liefern, die auf ein Maß einer Belastung rückschließen lassen, wie beispielsweise ein Drucksensor, der Drücke in einem durch das Gewicht des Schneidwerks belastetem Medium wie einer Flüssigkeit oder einem Gas misst oder beispielsweise ein Längen- oder Winkelmesser, der Verformungswege eines belasteten Bauteils wie einer Feder misst. Der Belastungssensor kann an einem Bauteil angeordnet sein, über das das Schneidwerk im angebauten Zustand am Einzugskanal gehalten ist. Auch der Sensorwert des Abstandssensors kann kabelgebunden über eine Verbindungsleitung elektrisch, durch eine direkte Verkabelung oder ein Bus-Netz, per Lichtwellenleiter, über einen NFC-Chip, per Funk/W-LAN oder auf sonstige Weise an die Auswertevorrichtung übertragen werden.

Die Schnittstelle stellt das von der Auswerteeinheit errechnete höhensteuerungsrelevante Signal bereit, damit es als eine Eingangsgröße von einer Steuerungs- oder Regelungsvorrichtung auf der Erntemaschine übernommen werden kann, die die Schwenkstellung des Einzugskanals und damit den Abstand des Schneidwerks vom Boden und den Gewichtsanteil, den der Einzugskanal vom Gewicht des Schneidwerks trägt, steuert oder regelt. Die Schnittstelle kann als Netzknoten eines Bus-Netzanschlusses ausgebildet sein, als Steckdose für den Stecker eines Verbindungskabels zwischen der Erntemaschine und dem Schneidwerk für eine elektrische oder optische Signalübertragung, als eine Funkschnittstelle, die das höhensteuerungsrelevante Signal über eine Funkverbindung mit der Erntemaschine kommuniziert, oder auf eine sonstige geeignete Art. Das höhensteuerungsrelevante Signal wird so bereitgestellt, dass es von der Steuerungs- oder Regelungsvorrichtung der Erntemaschine verarbeitbar ist. Das gilt auch für die Einhaltung eines gegebenenfalls definierten Übertragungsprotokolls, einer Meldefrequenz, einer Signalstärke und dergleichen.

Die Steuerungs- oder Regelungsvorrichtung auf der Erntemaschine kann das höhensteuerungsrelevante Signal in einem geeigneten Betriebsmodus weiterverarbeiten. Üblicherweise verfügen Erntemaschinen wie Mähdrescher über zumindest zwei Betriebsmodi, in denen die Höhensteuerung des Schneidwerks betrieben werden kann. **In** einem ersten Betriebsmodus wird das Schneidwerk auf eine Normalstellung eingestellt, dessen Einhaltung dann in einem Automatikmodus über mechanische oder andere Abstandssensoren überwacht und nachgesteuert oder nachgeregelt wird. Eine solche Höhensteuerung wird häufig ausgewählt, wenn ein Schneidwerk mit einem gewissen Abstand zum Boden gefahren werden soll. **In** einem zweiten Betriebsmodus erfolgt die Höhensteuerung über einen gemessenen Auflagedruck des Schneidwerks auf dem Boden. Dieser Betriebsmodus wird häufig ausgewählt, um das Schneidwerk möglichst bodennah zu führen. Durch die erfindungsgemäße Ausgestaltung des Schneidwerks ist es möglich, die Höhensteuerung des Schneidwerks erntemaschinenseitig dauerhaft über einen der beiden Betriebsmodi laufen zu lassen, ohne zwischen diesen Betriebsmodi hin und her schalten zu müssen oder über eine Automatik hin und her schalten zu lassen. Das erfindungsgemäße Schneidwerk kann beispielsweise im ersten Modus betrieben werden, indem es zu Beginn der Erntearbeit auf eine gewünschte Höhe eingestellt wird und die Höhenführung danach nur noch in Abhängigkeit von der Größe des höhensteuerungsrelevanten Signals erfolgt. Wegen der im Schneidwerk eingesetzten verschiedenen Sensortypen und der Verrechnung der Sensorwerte zu einem höhensteuerungsrelevanten Signal ist die Bodenführung verlässlicher, so dass das Schneidwerk im ersten Betriebsmodus in der vorgewählten Normallage bodennäher eingestellt werden kann. Die Normallage ist dann ähnlich oder identisch bodennah wie die Höhenlage des Schneidwerks im zweiten Betriebsmodus. Es ist aber davon unabhängig auch möglich, die Normallage des Schneidwerks höher vorzuwählen, wenn das gewünscht ist. Das Schneidwerk kann aber auch im zweiten Betriebsmodus bis zum Bodenkontakt abgesenkt und danach unter Auswertung des höhensteuerungsrelevanten Signals gefahren werden. Wie ein Drucksensorwert gibt auch das höhensteuerungsrelevante Signal einen Wert, mit dem das Schneidwerk wie ein bodendruckgesteuertes Schneidwerk höhengeführt werden kann.

Um das höhensteuerungsrelevante Signal zu erhalten, verrechnet die Auswertevorrichtung die Sensorwerte des Abstandssensors und des Belastungssensors. Die Verrechnung erfolgt, indem die der Auswertevorrichtung übermittelten Sensorwerte in ein im Programm hinterlegtes Verhältnis zueinander gesetzt werden. Aus der Verhältnisbildung ergibt sich ein jeweiliger Rechenwert, der als solcher oder um einen Faktor vergrößert oder verkleinert an die Schnittstelle übermittelt wird, von wo aus er von der Erntemaschine übernehmbar ist und von der erntemaschinenseitigen Steuerungs- oder Regelungsvorrichtung zu einem Stellbefehl an die Höhensteuerung des Einzugssignals weiterverrechnet werden kann. Der Faktor kann konstant oder variabel ausgestaltet sein. Die Auswertevorrichtung gibt das höhensteuerungsrelevante Signal in einer Größe aus, in der es für die Weiterverarbeitung für die Steuerungs- oder Regelungsvorrichtung der Erntemaschine geeignet und verarbeitbar ist. Damit das höhensteuerungsrelevante Signal von Erntemaschinen verschiedener Hersteller weiterverarbeitbar ist, kann es von der Auswertevorrichtung bei Bedarf durch einen Korrekturfaktor anpassbar sein.

Die Erfindung wird auch gelöst durch ein Verfahren zur Höhenführung eines an den höhenverstellbaren Einzugskanal einer Erntemaschine angebauten Schneidwerks, wobei ein an dem Schneidwerk angeordneter Abstandssensor den Abstand des Schneidwerks zum Boden ermittelt und daraus einen Sensorwert generiert, der einer Auswertevorrichtung übermittelt wird, an dem Schneidwerk ein Belastungssensor angeordnet ist, der die Belastung misst, mit der das Schneidwerk den Einzugskanal belastet, und daraus einen Sensorwert generiert, der der Auswertevorrichtung übermittelt wird, die Auswertevorrichtung ein Programm aufweist, das über eine geeignete Programmierung aus den übermittelten Sensorwerten des Abstandssensors und des Belastungssensors ein höhensteuerungsrelevantes Signal errechnet, und das höhensteuerungsrelevante Signal an eine Schnittstelle übermittelt wird, über die es an eine auf der Erntemaschine angeordnete Steuerungs- oder Regelungsvorrichtung übermittelbar ist.

Für das Verfahren gelten die vorstehenden Ausführungen entsprechend.

Nach einer Ausgestaltung der Erfindung ist das Schneidwerk über ein Federsystem mit dem Einzugskanal einer Erntemaschine verbunden und als Belastungssensor ist eine Vorrichtung zur Messung des Federwegs des Federsystems vorhanden. Wird ein Teil des Gewichts des Schneidwerks auf dem Boden abgestützt, wird das auf den Federn lastende Gewicht verringert. Die Federn federn dadurch aus und verlängern sich. Umgekehrt federn die Federn ein, wenn sich der auf dem Boden abgestützte Gewichtsanteil des Schneidwerks wieder verringert. Diese Bewegungen können gut von einem Federwegmesssystem erfasst und als die dabei erzielten Messwerte als Sensorwerte an die Auswertevorrichtung übermittelt werden.

Nach einer Ausgestaltung der Erfindung mittelt die Auswertevorrichtung die in einem Zeitintervall übermittelten Sensorwerte. Beispielsweise werden bei zwei Sensoren die Sensorwerte addiert und die Summe halbiert, bei vier Sensoren die Sensorwerte addiert und die Summe geviertelt, und dergleichen. Über die Mittelung der Sensorwerte fließen die Sensorwerte des Abstandssensors, wenn dieser keinen Abstand zum Boden signalisiert, und des Belastungssensors, wenn dieser eine volle Belastung des Einzugskanals signalisiert, zwar in das höhensteuerungsrelevante Signal mit ein, über die Mittelung der Sensorwerte haben diese Nullwerte aber nur einen dämpfenden Effekt auf die Größe des höhensteuerungsrelevanten Signals. Extreme Regelungsausschläge der Höhensteuerung werden dadurch vermieden. Auch wirkt sich die Dämpfung gerade in den Übergangsbereichen zu den Nullwerten der beiden Sensortypen beruhigend auf die Schneidwerkshöhenführung aus, weil keine abrupte Umschaltung von einem Steuerungsmodus auf den anderen erfolgt, sondern sich das höhensteuerungsrelevante Signal in seiner Größe nur leicht verändert, so wie sich der Bodenabstand oder der vom Einzugskanal getragene Anteil des Schneidwerksgewichts verändert. Starke Veränderungen der Bodenkontur im Verhältnis zur aktuellen Höheneinstellung des Schneidwerks werden gleichwohl in ein dazu passendes höhensteuerungsrelevantes Signal verrechnet, das eine Anhebung oder Absenkung des Schneidwerks in die passende Richtung signalisiert.

Nach einer Ausgestaltung der Erfindung erhöht oder vermindert die Auswertevorrichtung den in einem Zeitintervall übermittelten Sensorwert des Abstandssensors um einen Korrekturfaktor, wenn der Sensorwert des Belastungssensors eine volle Belastung des Einzugskanals signalisiert, und/oder die Auswertevorrichtung erhöht oder vermindert den in einem Zeitintervall übermittelten Sensorwert des Belastungssensors um einen Korrekturfaktor, wenn der Sensorwert des Abstandssensors keinen Abstand des Schneidwerks zum Boden signalisiert. Um die Reaktionsgeschwindigkeit der Steuerungs- oder Regelungsvorrichtung auf der Erntemaschine zu erhöhen oder zu vermindern, kann die Auswertevorrichtung den jeweiligen Sensorwert durch eine Verrechnung mit einem Korrekturfaktor erhöhen oder vermindern, um den Einfluss der Dämpfung durch die Mittelung der Sensorwerte zu verringern oder zu verstärken. Der Korrekturfaktor kann konstant gleich bleiben oder variabel sein.

Nach einer Ausgestaltung der Erfindung werden die Sensorwerte als prozentuale Werte zwischen dem jeweiligen Minimal- und dem Maximalwert des Abstands- und des Belastungssensors an die Auswertevorrichtung übermittelt oder von dieser in prozentuale Werte zwischen dem jeweiligen Minimal- und dem Maximalwert umgerechnet. Als Prozentwerte übermittelte oder in Prozentwerte umgerechnete Sensorwerte sind von einer erntemaschinenseitigen Steuerungs- oder Regelungsvorrichtung gut weiterzuverarbeiten.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nach-folgenden gegenständlichen Beschreibung und den Zeichnungen entnehmen.

Die Erfindung soll nun anhand von Ausführungsbeispielen näher erläutert werden. Es zeigen:

Fig. 1: eine Seitenansicht einer Erntemaschine mit einem zum Boden beabstandeten Schneidwerk, und

Fig. 2: eine Seitenansicht einer Erntemaschine mit einem Schneidwerk, das einen Bodenkontakt hat.

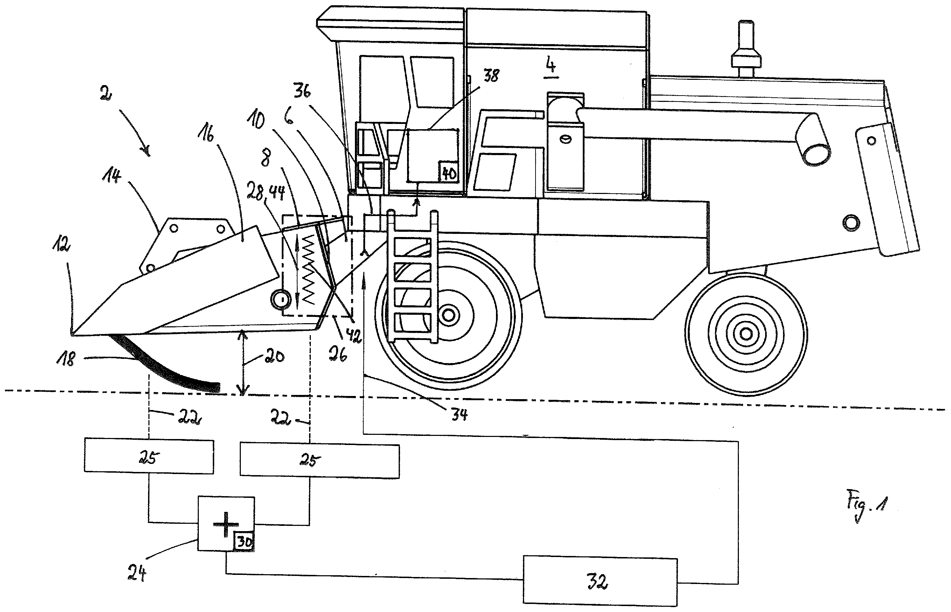

In Fig. 1 ist eine Erntemaschine 4 gezeigt, an die in der in Fahrtrichtung weisenden Seite ein Schneidwerk 2 angebaut ist. Das Schneidwerk 2 ist mit seinem Rahmen 8 an dem höhenverstellbaren Einzugskanal 6 gehalten. Der Rahmen 8 verfügt über eine Anbauvorrichtung 10, mit dem das Schneidwerk 2 an die Erntemaschine 4 anbaubar ist.

An der Vorderkante des Schneidwerks 2 befinden sich Schneidelemente 12 wie beispielsweise ein Messerbalken. Des Weiteren befinden sich an dem Schneidwerk Fördervorrichtungen 14, wie beispielsweise Förderschnecken und/oder Bandförderer, mit denen das geschnittene Erntegut in Richtung des Einzugskanals befördert und dorthin abgegeben wird, oder einer Haspel, die in den Seitenansichten erkennbar ist. Des Weiteren verfügt das Schneidwerk 2 über Antriebe 16, mit denen die Schneidelemente 12 sowie die Fördervorrichtungen 14 angetrieben sind. Im Ausführungsbeispiel befinden sich die Antriebe 16 hinter der mit der Bezugsziffer 16 versehenen Seitenklappe an der Seitenwand des Schneidwerks 2.

Als Beispiel für einen Abstandssensor 18 ist in Fig. 1 eine Tastkufe gezeigt. Für die Zwecke der Erfindung können aber auch beliebige andere Sensortypen verwendet werden, wie beispielsweise Laser, Ultraschallsensoren oder Abstandssensoren, die nach anderen physikalischen Prinzipien arbeiten. In der in Fig. 1 dargestellten Arbeitssituation ist das Schneidwerk 2 mit einem so großen Abstand 20 zum Boden gehalten, dass ein Bodenkontakt des Schneidwerks 2 ausgeschlossen ist. Der Abstand 20 ist aber auch noch so gering, dass der Abstandssensor 18 den Abstand 20 zum Boden messen kann.

Der Abstandssensor 18 ist über eine Verbindungsleitung 22 mit einer Auswertevorrichtung 24 verbunden.

Als weiterer Sensor ist in dem Schneidwerk 2 ein Belastungssensor 26 vorhanden, mit dem ermittelt wird, mit welcher Belastung 28 der Einzugskanal 6 der Erntemaschine 4 aus dem Gewicht des Schneidwerks belastet ist. Da das Schneidwerk in der in Fig. 1 gezeigten Arbeitsstellung mit einem großen Abstand 20 zum Boden gehalten ist, trägt der Einzugskanal 6 das volle Gewicht des Schneidwerks 2. Der Belastungssensor 26 überträgt die von ihm gemessenen Sensorwerte über eine Verbindungsleitung 22 ebenfalls an die Auswertevorrichtung 24. Im Ausführungsbeispiel handelt es sich bei dem Belastungssensor 26 um eine Vorrichtung zur Messung des Federwegs 44 des Federsystems 42. Unabhängig von diesem Sensortyp können auch andere Sensortypen verwendet werden, um die Belastung des Einzugskanals 6 durch das Gewicht des Schneidwerks zu ermitteln.

Die Auswertevorrichtung 24 verfügt über ein Programm 30, das über eine geeignete Programmierung aus den vom Abstandssensor 18 und Belastungssensor 26 übermittelten Sensorwerten 25 ein höhensteuerungsrelevantes Signal 32 errechnet, das an die Schnittstelle 34 übermittelt wird. Von der schneidwerksseitigen Schnittstelle 34 wird das höhensteuerungsrelevante Signal 32 an die erntemaschinenseitige Schnittstelle 36 übergeben. Die erntemaschinenseitige Schnittstelle 36 ist mit einer Steuerungs- oder Regelungsvorrichtung 38 verbunden, die auf der Erntemaschine 4 vorgehalten ist. Ein Teil der Steuerungs- oder Regelungsvorrichtung 38 ist ein Verstellantrieb 40, über dessen Betätigung der Einzugskanal 6 der Erntemaschine 4 höhenverstellbar ist. Der Verstellantrieb 40 kann beispielsweise aus zeichnerisch nicht näher dargestellten Hydraulikzylindern bestehen, die durch Ein- und Ausfahren den Einzugskanal 6 absenken oder anheben, je nach Bewegungsrichtung. Die Hydraulikzylinder werden über ein entsprechendes Hydrauliksystem mit entsprechenden Ventilen beaufschlagt.

In dem in Fig. 1 gezeigten Ausführungsbeispiel meldet der Abstandssensor 18 beispielsweise einen Ausschlag der Tastkufe um 30 % als Sensorwert 25 des Abstandssensors 18. Da das volle Gewicht des Schneidwerks 2 vom Einzugskanal 6 getragen wird, meldet der Belastungssensor 26 als Sensorwert 25 eine Belastung von 100 %. Aus diesen beiden Zahlenwerten ergibt sich folgende Rechnung:

$$30\,\% + 100\,\% = 130\,\% : 2 = 65\,\%$$

Dieser Wert von 65 % wird von der Auswertevorrichtung 24 als höhensteuerungsrelevantes Signal 32 an die Schnittstelle 34 übermittelt. Dieser prozentuale Wert kann von der Steuerungs- oder Regelungsvorrichtung 38 zu einem Stellsignal an den Verstellantrieb 40 weiterverarbeitet werden, wenn dies nach der Bewertung des höhensteuerungsrelevanten Signals 32 durch die Steuerungs- oder Regelungsvorrichtung 38 als notwendig erscheint.

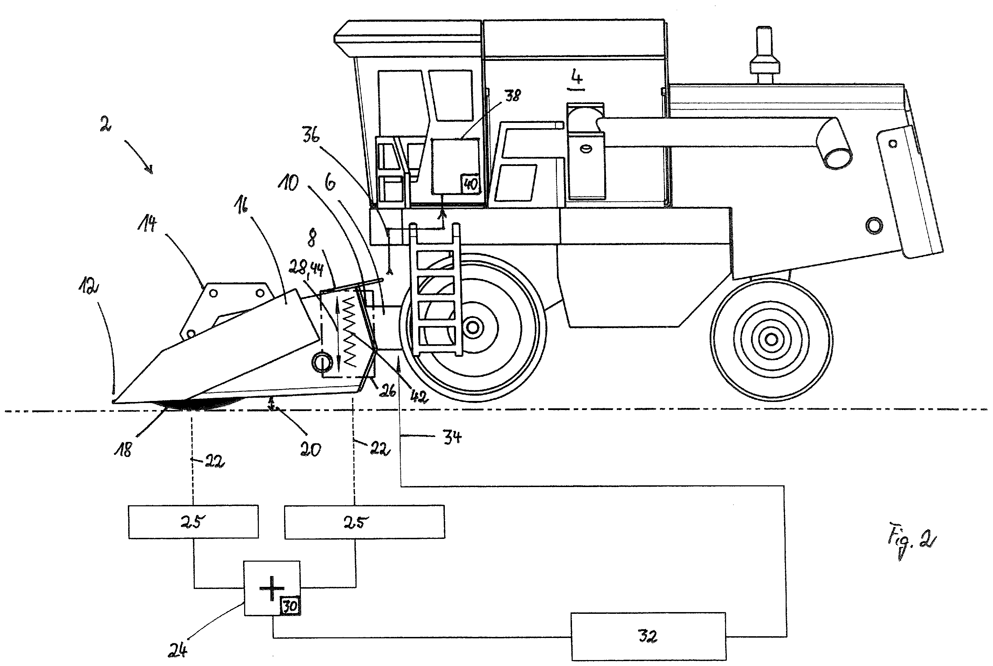

Bei dem in Fig. 2 dargestellten Ausführungsbeispiel ist die Tastkufe des Abstandssensors 18 durch den Bodenkontakt, den sie hat, vollständig eingeklappt. Demgemäß beträgt ihr Ausschlag den Wert von 0 %. Durch den Bodenkontakt des Schneidwerks 2 wird der Einzugskanal 6 gewichtsmäßig teilweise entlastet. Bei dem in Fig. 2 dargestellten Ausführungsbeispiel trägt der Einzugskanal 6 noch 20 % des Gewichts des Schneidwerks 2. Der Sensorwert 25 des Belastungssensors 26 beträgt somit 20 %. Bei der Verrechnung der beiden Sensorwerte 25 durch die Auswertevorrichtung ergibt sich die folgende Rechnung:

$$0\,\% + 20\,\% = 20\,\% : 2 = 10\,\%$$

Das von der Auswertevorrichtung 24 ermittelte höhensteuerungsrelevante Signal 32 beträgt also in dem in Fig. 2 dargestellten zweiten Ausführungsbeispiel 10 %.

Je nach Höheneinstellung des Schneidwerks 2 am Einzugskanal 6 können die vorstehend beschriebenen Sensorwerte 25 des Abstandssensors 18 und des Belastungssensors 26 natürlich variieren. Je nach Größe der Sensorwerte 25 ergibt sich dann ein entsprechend unterschiedliches höhensteuerungsrelevantes Signal 32.

Durch die hälftige Teilung der Summe der beiden Sensorwerte 25 werden diese gleichranging gewichtet. Abweichend vom Ausführungsbeispiel ist es natürlich auch möglich, den Abstandssensor 18 oder den Belastungssensor 26 gegenüber dem anderen Sensor höher zu gewichten. Die jeweilige Gewichtung der Sensorwerte 25 kann entweder fest in dem Programm 30 programmiert sein, oder es gibt für den Bediener der Erntemaschine 4 eine Möglichkeit, die Gewichtung nach seiner Wahl zu verändern. In jedem Fall wird durch die Verrechnung der Sensorwerte ein Bruch an dem Punkt vermieden, an dem sich die Werte eines der Sensoren nicht mehr ändern, wie beim Abstandssensor 18, wenn der Abstand zum Boden 0 beträgt, und beim Belastungssensor 26, wenn der Einzugskanal 6 100 % des Gewichts des Schneidwerks 4 trägt.

Genauso kann in einem Ausführungsbeispiel vorgesehen sein, dass die Auswertevorrichtung 24 die in einem Zeitintervall übermittelten Sensorwerte 25 mittelt.

Die Erfindung bezieht sich auch auf ein Verfahren, das nach dem vorbeschriebenen Muster ein höhensteuerungsrelevantes Signal 32 ermittelt und dieses an eine auf der Erntemaschine 4 angeordnete Steuerungs- oder Regelungsvorrichtung 38 übermittelt.

Bei dem Verfahren ist es möglich, dass die Auswertevorrichtung 24 den in einem Zeitintervall übermittelten Sensorwert 25 des Abstandssensors 18 um einen Korrekturfaktor erhöht oder vermindert, wenn der Sensorwert 25 des Belastungssensors 26 eine volle Belastung 28 des Einzugskanals signalisiert, und/oder die Auswertevorrichtung 24 den in einem Zeitintervall übermittelten Sensorwert 25 des Belastungssensors 26 um einen Korrekturfaktor erhöht oder vermindert, wenn der Sensorwert 25 des Abstandssensors 18 keinen Abstand 20 des Schneidwerks 2 zum Boden signalisiert.

Nach einem weiteren Ausführungsbeispiel werden die Sensorwerte 25 als prozentuale Werte zwischen dem jeweiligen Minimal- und dem Maximalwert an die Auswertevorrichtung 24 übermittelt und/oder von dieser in prozentuale Werte zwischen dem jeweiligen Minimal- und dem Maximalwert umgerechnet, um sodann das Ergebnis dieser Rechnung als ein höhensteuerungsrelevantes Signal 32 an die Schnittstelle 34 zu übermitteln.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

Bezugsziffernliste

| | |
|---|---|
| 2 | Schneidwerk |
| 4 | Erntemaschine |
| 6 | Einzugskanal |
| 8 | Rahmen |
| 10 | Anbauvorrichtung |
| 12 | Schneidelement |
| 14 | Fördervorrichtung |
| 16 | Antrieb |
| 18 | Abstandssensor |
| 20 | Abstand |
| 22 | Verbindungsleitung |
| 24 | Auswertevorrichtung |
| 25 | Sensorwert |
| 26 | Belastungssensor |
| 28 | Belastung |
| 30 | Programm |
| 32 | höhensteuerungsrelevantes Signal |
| 34 | Schnittstelle (Schneidwerk) |
| 36 | Schnittstelle (Erntemaschine) |
| 38 | Steuerungs- oder Regelungsvorrichtung |
| 40 | Verstellantrieb (Erntemaschine) |
| 42 | Federsystem |
| 44 | Vorrichtung zur Federwegmessung |

**Patentansprüche**

1. Schneidwerk (2) zum Anbau an den höhenverstellbaren Einzugskanal (6) einer Erntemaschine (4) mit einem Rahmen (8), einer mit dem Rahmen (8) verbundenen Anbauvorrichtung (10) zum Anbau des Schneidwerks (2) an die Erntemaschine (4), Schneidelementen (12), Fördervorrichtungen (14) und Antrieben (16), zumindest einem am Schneidwerk (2) angeordneten Abstandssensor (18) zur Ermittlung des Abstands (20) des Schneidwerks (2) vom Boden, und einer Schnittstelle (34), über die höhensteuerungsrelevante Signale (32) an eine auf der Erntemaschine (4) angeordnete Steuerungs- oder Regelungsvorrichtung (38) übermittelbar sind, wobei das Schneidwerk (2) zumindest einen zusätzlichen Belastungssensor (26) aufweist, der die Belastung (28) misst, mit der das Schneidwerk (2) den Einzugskanal (6) belastet, **dadurch gekennzeichnet, dass** der Schnittstelle (34) eine Auswertevorrichtung (24) vorgeordnet ist, der die vom Abstandssensor (18) gemessenen Sensorwerte (25) über eine Verbindungsleitung (22) übermittelt werden, die vom Belastungssensor (26) gemessenen Sensorwerte (25) ebenfalls an die Auswertevorrichtung (24) über eine Verbindungsleitung (22) übermittelt werden, und die Auswertevorrichtung (24) ein Programm (30) aufweist, das über eine geeignete Programmierung aus den übermittelten Sensorwerten (25) des Abstandssensors (18) und des Belastungssensors (26) ein höhensteuerungsrelevantes Signal (32) errechnet, das an die Schnittstelle (34) übermittelt wird.

2. Schneidwerk (2) nach Anspruch 1, **dadurch gekennzeichnet, dass** das Schneidwerk (2) über ein Federsystem (42) mit dem Einzugskanal (6) einer Erntemaschine (4) verbunden ist und als Belastungssensor (26) eine Vorrichtung zur Messung des Federwegs (44) des Federsystems (42) vorhanden ist.

3. Verfahren zur Höhenführung eines an den höhenverstellbaren Einzugskanal (6) einer Erntemaschine (4) angebauten Schneidwerks (2), wobei ein an dem Schneidwerk (2) angeordneter Abstandssensor (18) den Abstand (20) des Schneidwerks (2) zum Boden ermittelt und daraus einen Sensorwert (25) generiert, der einer Auswertevorrichtung (24) des Schneidwerks (2) übermittelt wird, an dem Schneidwerk (2) ein Belastungssensor (26) angeordnet ist, der die Belastung (28) misst, mit der das Schneidwerk (2) den Einzugskanal (6) belastet, und daraus einen Sensorwert (25) generiert, der der Auswertevorrichtung (24) übermittelt wird, die Auswertevorrichtung (24) ein Programm (30) aufweist, das über eine geeignete Programmierung aus den übermittelten Sensorwerten (25) des Abstandssensors (18) und des Belastungssensors (26) ein höhensteuerungsrelevantes Signal (32) errechnet, und das höhensteuerungsrelevante Signal (32) an eine Schnittstelle (36) übermittelt wird, über die es an eine auf der Erntemaschine (4) angeordnete Steuerungs- oder Regelungsvorrichtung (38) übermittelbar ist.

4. Verfahren nach Anspruch 3, **dadurch gekennzeichnet, dass** die Auswertevorrichtung (24) die in einem Zeitintervall übermittelten Sensorwerte (25) mittelt.

5. Verfahren nach Anspruch 3 oder 4, **dadurch gekennzeichnet, dass** die Auswertevorrichtung (24) den in einem Zeitintervall übermittelten Sensorwert (25) des Abstandssensors (18) um einen Korrekturfaktor erhöht oder vermindert, wenn der Sensorwert (25) des Belastungssensors (26) eine volle Belastung (28) des Einzugskanals (6) signalisiert, und/oder die Auswertevorrichtung (24) den in einem Zeitintervall übermittelten Sensorwert (25) des Belastungssensors (26) um einen Korrekturfaktor erhöht oder vermindert, wenn der Sensorwert (25) des Abstandssensors (18) keinen Abstand (20) des Schneidwerks (2) zum Boden signalisiert.

6. Verfahren nach einem der Ansprüche 3 bis 5, **dadurch gekennzeichnet, dass** die Sensorwerte (25) als prozentuale Werte zwischen dem jeweiligen Minimal- und dem Maximalwert an die Auswertevorrichtung (24) übermittelt oder von dieser in prozentuale Werte zwischen dem jeweiligen Minimal- und dem Maximalwert umgerechnet werden.

## Claims

1. Cutterbar (2) for attaching to the height-adjustable feeder housing (6) of a harvesting machine (4) with a frame (8), an attachment device (10) connected to the frame (8) for attaching the cutterbar (2) to the harvesting machine (4), cutting elements (12), conveyor devices (14) and drives (16), at least one distance sensor (18) arranged on the cutterbar (2) for determining the distance (20) of the cutterbar (2) from the ground, and an interface (34) via which signals (32) relevant to height control can be transmitted to a control or regulating device (38) arranged on the harvesting machine (4), wherein the cutterbar (2) has at least one additional load sensor (26) which measures the load (28) with which the cutterbar (2) loads the feeder housing (6), **characterized in that** the interface (34) is arranged upstream of an evaluation device (24) to which the sensor values (25) measured by the distance sensor (18) are transmitted via a connecting line (22), the sensor values (25) measured by the load sensor (26) are also transmitted to the evaluation device (24) via a connecting line (22), and the evaluation device (24) has a program (30) which uses suitable programming to calculate a signal (32) relevant to height control from the transmitted sensor values (25) of the distance sensor (18) and the load sensor (26), which signal is transmitted to the interface (34).

2. Cutterbar (2) according to claim 1, **characterized in that** the cutterbar (2) is connected to the feeder housing (6) of a harvesting machine (4) via a spring system (42) and a device for measuring the spring travel (44) of the spring system (42) is provided as a load sensor (26).

**3.** Method for height guidance of a cutterbar (2) attached to the height-adjustable feeder housing (6) of a harvesting machine (4), wherein a distance sensor (18) arranged on the cutterbar (2) determines the distance (20) of the cutterbar (2) from the ground and generates a sensor value (25) therefrom, which is transmitted to an evaluation device (24) of the cutterbar (2), a load sensor (26) is arranged on the cutterbar (2), which measures the load (28) with which the cutterbar (2) loads the feeder housing (6), and generates a sensor value (25) therefrom, which is transmitted to the evaluation device (24), the evaluation device (24) has a program (30) which calculates a height control-relevant signal (32) from the transmitted sensor values (25) of the distance sensor (18) and the load sensor (26) via suitable programming, and the height control-relevant signal (32) is transmitted to an interface (36) via which it can be transmitted to a control or regulating device (38) arranged on the harvesting machine (4).

**4.** Method according to claim 3, **characterized in that** the evaluation device (24) averages the sensor values (25) transmitted in a time interval.

**5.** Method according to claim 3 or 4, **characterized in that** the evaluation device (24) increases or decreases the sensor value (25) of the distance sensor (18) transmitted in a time interval by a correction factor if the sensor value (25) of the load sensor (26) signals a full load (28) of the feeder housing (6), and/or the evaluation device (24) increases or decreases the sensor value (25) of the load sensor (26) transmitted in a time interval by a correction factor if the sensor value (25) of the distance sensor (18) does not signal a distance (20) of the cutterbar (2) to the ground.

**6.** Method according to one of claims 3 to 5, **characterized in that** the sensor values (25) are transmitted as percentage values between the respective minimum and maximum values to the evaluation device (24) or are converted by the latter into percentage values between the respective minimum and maximum values.

## Revendications

**1.** Unité de coupe (2) destinée à être montée sur le canal d'alimentation (6) réglable en hauteur d'une machine de récolte (4) ayant un châssis (8), un dispositif de montage (10) relié au châssis (8) pour le montage de l'unité de coupe (2) sur la machine de récolte (4), des éléments de coupe (12), des dispositifs de transport (14) et des moyens d'entraînement (16), au moins un capteur de distance (18) agencé sur l'unité de coupe (2) pour déterminer la distance (20) entre l'unité de coupe (2) et le sol, et une interface (34) par laquelle des signaux (32) pertinents pour la commande de hauteur sont aptes à être transmis à un dispositif de commande ou de régulation (38) agencé sur la machine de récolte (4), l'unité de coupe (2) présentant au moins un capteur de charge (26) supplémentaire qui mesure la charge (28) avec laquelle l'unité de coupe (2) sollicite le canal d'alimentation (6),
**caractérisée en ce que** l'interface (34) est précédée d'un dispositif d'évaluation (24) auquel les valeurs de capteur (25) mesurées par le capteur de distance (18) sont transmises par une ligne de connexion (22), les valeurs de capteur (25) mesurées par le capteur de charge (26) sont également transmises au dispositif d'évaluation (24) par une ligne de connexion (22), et le dispositif d'évaluation (24) présente un programme (30) qui, par le biais d'une programmation appropriée, calcule à partir des valeurs de capteur (25) transmises du capteur de distance (18) et du capteur de charge (26) un signal (32) pertinent pour la commande de hauteur, qui est transmis à l'interface (34).

**2.** Unité de coupe (2) selon la revendication 1, **caractérisée en ce que** l'unité de coupe (2) est reliée au canal d'alimentation (6) d'une machine de récolte (4) par l'intermédiaire d'un système à ressort (42) et **en ce qu'**il existe, en tant que capteur de charge (26), un dispositif de mesure de la course du ressort (44) du système à ressort (42).

**3.** Procédé de guidage en hauteur d'une unité de coupe (2) montée sur le canal d'alimentation (6) réglable en hauteur d'une machine de récolte (4), un capteur de distance (18) agencé sur l'unité de coupe (2) déterminant la distance (20) de l'unité de coupe (2) par rapport au sol et, à partir de là, générant une valeur de capteur (25), qui est transmise à un dispositif d'évaluation (24) de l'unité de coupe (2), un capteur de charge (26) est agencé sur l'unité de coupe (2), lequel mesure la charge (28) avec laquelle l'unité de coupe (2) sollicite le canal d'alimentation (6), et, à partir de là, génère une valeur de capteur (25) qui est transmise au dispositif d'évaluation (24), le dispositif d'évaluation (24) présente un programme (30) qui, par le biais d'une programmation appropriée, calcule un signal (32) pertinent pour la commande de hauteur à partir des valeurs de capteur (25) transmises du capteur de distance (18) et du capteur de charge (26), et le signal (32) relatif à la commande de hauteur est transmis à une interface (36) par laquelle il est apte à être transmis à un dispositif de commande ou de régulation (38) agencé sur la machine de récolte (4).

**4.** Procédé selon la revendication 3, **caractérisé en ce que** le dispositif d'évaluation (24) fait la moyenne des valeurs de capteur (25) transmises dans un intervalle de temps.

5. Procédé selon la revendication 3 ou la revendication 4, **caractérisé en ce que** le dispositif d'évaluation (24) augmente ou diminue d'un facteur de correction la valeur de capteur (25) du capteur de distance (18) transmise dans un intervalle de temps, lorsque la valeur de capteur (25) du capteur de charge (26) signale une charge complète (28) du canal d'alimentation (6), et/ou le dispositif d'évaluation (24) augmente ou diminue d'un facteur de correction la valeur (25) du capteur de charge (26) transmise dans un intervalle de temps lorsque la valeur (25) du capteur de distance (18) ne signale aucune distance (20) entre l'unité de coupe (2) et le sol.

6. Procédé selon l'une des revendications 3 à 5, **caractérisé en ce que** les valeurs de capteur (25) sont transmises au dispositif d'évaluation (24) sous forme de valeurs en pourcentage entre la valeur minimale et la valeur maximale respectives ou sont converties par celui-ci en valeurs en pourcentage entre la valeur minimale et la valeur maximale respectives.

Fig. 1
2
4
6
8
10
12
14
16
18
20
22
22
24
25
25
26
28, 44
30
32
34
36
38
40
42

Fig. 2
2
4
6
8
10
12
14
16
18
20
22
24
25
26
28
30
32
34
36
38
40
42
44

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4406892 A1
- EP 3335541 A
- EP 3363276 A1
- EP 2695511 A1
- WO 2018152266 A1
- EP 3363276 A